# EUROPEAN PATENT APPLICATION

(11) **EP 4 438 640 A1**
(43) Date of publication of application: **02.10.2024**
(21) Application number: 22899052.9
(22) Date of filing: 24.11.2022
(51) Int. Cl.: C08F 210/16, C08F 4/6592, C08F 4/659, C08L 23/00, C08L 23/08

(54) **ETHYLENE ALPHA-OLEFIN COPOLYMER AND RESIN COMPOSITION COMPRISING SAME**

(30) Priority: 25.11.2021 KR 20210163905
(71) Applicant: LOTTE CHEMICAL CORPORATION, Seoul 05551 (KR)
(72) Inventor: HONG, Youn-Jin, Daejeon 34110 (KR); HUH, Chan-Hwa, Daejeon 34110 (KR); KIM, Ho-Seok, Daejeon 34110 (KR); JANG, Ji-Hoon, Daejeon 34110 (KR); HA, Dal-Yong, Daejeon 34110 (KR); CHAE, Byung-Hun, Daejeon 34110 (KR); HWANG, Yeun-Hee, Daejeon 34110 (KR)
(74) Representative: Germain Maureau
(86) International application number: PCT/KR2022/018710
(87) International publication number: WO 2023/096370

(57) **Abstract**

An objective of the present invention is to provide an ethylene alpha-olefin copolymer containing a large amount of chains having high comonomer content and having a specific range of density and melt index. The present invention provides an ethylene alpha-olefin copolymer comprising an ethylene structural unit and an alpha-olefin structural unit, the ethylene alpha-olefin copolymer having an elution amount of 10% by weight or more at 35°C when analyzed by means of thermal gradient interaction chromatography (TGIC).

## Description

### [Technical Field]

The present disclosure relates to an ethylene α-olefin copolymer and a resin composition including the same.

### [Background Art]

A polyolefin is a widely used polymer material, and has been used by being mixed, mainly with an ethylene α-olefin copolymer, in order to improve physical properties at low temperature and mechanical properties of the polyolefin.

However, in order to obtain an effect of having sufficient physical properties at low temperature and improving mechanical properties, the ethylene α-olefin copolymer having a low density should be mixed, and when an excessive amount of the ethylene α-olefin copolymer having a low density is mixed, tensile strength of a composite resin is decreased.

Thus, there is a need for a study of a method of improving physical properties at low temperature and mechanical properties of a composite resin without a decrease in tensile strength.

(Patent Document 1) Korean Laid-Open Publication No. 10-2016-0066979 A

### [Disclosure]

### [Technical Problem]

An aspect of the present disclosure is to provide an ethylene α-olefin copolymer containing a large number of chains having a high comonomer content while having a specific range of density and melt index.

Another aspect of the present disclosure is to provide a resin composition including the ethylene α-olefin copolymer.

### [Technical Solution]

According to an aspect of the present disclosure, an ethylene α-olefin copolymer includes an ethylene structural unit and an α-olefin structural unit, wherein the ethylene α-olefin copolymer has an elution amount of 10% by weight or more at 35°C when analyzed by thermal gradient interaction chromatography (TGIC).

According to another aspect of the present disclosure, a resin composition includes a polyolefin and the ethylene α-olefin copolymer.

### [Advantageous Effects]

Since the ethylene α-olefin copolymer according to the present disclosure contains a large number of chains having a high comonomer content, it has higher tensile elongation than conventional ethylene α-olefin copolymer having similar density.

In addition, when the ethylene α-olefin copolymer according to the present disclosure is mixed with a polyolefin, a resin composition having high impact strength and high elongation without a decrease in tensile strength is provided.

### [Description of Drawings]

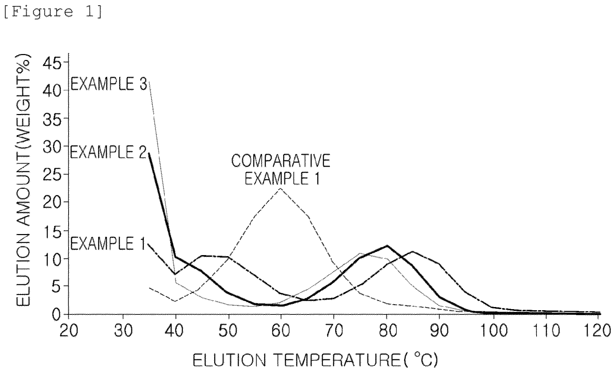

FIG. 1 is a drawing illustrating TGIC analysis results of ethylene α-olefin copolymers prepared in the example and the comparative example.

### [Best Mode for Invention]

Hereinafter, preferred exemplary embodiments in the present disclosure will now be described in detail. However, the exemplary embodiments in the present disclosure may be modified in many different forms and the scope of the disclosure should not be limited to the embodiments set forth herein.

The term "alkyl" described in the present disclosure refers to a monovalent straight-chain or branched-chain saturated hydrocarbon radical consisting of only carbon and hydrogen atoms, and an example of the alkyl radical includes methyl, ethyl, propyl, isopropyl, butyl, isobutyl, t-butyl, pentyl, hexyl, octyl, dodecyl, cyclopropyl, cyclobutyl, cyclopentyl, cyclohexyl, cycloheptyl, cyclooctyl, cyclononyl, cyclodecyl, and the like, but is not limited thereto.

In addition, the term "alkenyl" described in the present disclosure refers to a straight-chain or branched-chain hydrocarbon radical containing one or more carboncarbon double bonds, and includes ethenyl, propenyl, butenyl, pentenyl, and the like, but is not limited thereto.

In addition, the term "alkynyl" described in the present disclosure refers to a straight-chain or branched-chain hydrocarbon radical containing one or more carboncarbon triple bonds, and includes methynyl, ethynyl, propynyl, butynyl, pentynyl, hexynyl, heptynyl, octynyl, and the like, but is not limited thereto.

In addition, the term "aryl" described in the present disclosure is an organic radical derived from an aromatic hydrocarbon by removing one hydrogen, and includes a monocyclic or fused cyclic system. A specific example thereof includes phenyl, naphthyl, biphenyl, anthryl, fluorenyl, phenanthryl, triphenylenyl, pyrenyl, perylenyl, chrysenyl, naphthacenyl, fluoranthenyl, and the like, but is not limited thereto.

In addition, the term "alkylaryl" described in the present disclosure refers to an organic group in which one or more hydrogens of an aryl group is substituted by an alkyl group, and includes methylphenyl, ethylphenyl, n-propylphenyl, isopropylphenyl, n-butylphenyl, isobutylphenyl, t-butylphenyl, and the like, but is not limited thereto.

In addition, the term "arylalkyl" described in the present disclosure refers to an organic group in which one or more hydrogens of an alkyl group is substituted by an aryl group, and includes phenylpropyl, phenylhexyl, and the like, but is not limited thereto.

In addition, the term "amido" described in the present disclosure refers to an amino group (-NH₂) bonded to a carbonyl group (C=O), "alkylamido" refers to an organic group in which at least one hydrogen in -NH₂ of an amido group is substituted by an alkyl group, "arylamido" is an organic group in which at least one hydrogen in -NH₂ of an amido group is substituted by an aryl group, and the alkyl group in the alkylamido group and the aryl group in the arylamido group may be as exemplified in the alkyl group and the aryl group described above, but the present disclosure is not limited thereto.

In addition, the term "alkylidene" described in the present disclosure refers to a divalent aliphatic hydrocarbon group in which two hydrogen atoms are removed from the same carbon atom of an alkyl group, and includes ethylidene, propylidene, isopropylidene, butylidene, pentylidene, and the like, but is not limited thereto.

In addition, the term "acetal" described in the present disclosure refers to an organic group formed by a bond of alcohol and aldehyde, that is, a substituent group having two ether (-OR) bonds on one carbon, and includes methoxymethoxy, 1-methoxyethoxy, 1-methoxypropyloxy, 1-methoxybutyloxy, 1-ethoxyethoxy, 1-ethoxypropyloxy, 1-ethoxybutyloxy, 1-(n-butoxy)ethoxy, 1-(iso-butoxy)ethoxy, 1-(sec-butoxy)ethoxy, 1-(tert-butoxy)ethoxy, 1-(cyclohexyloxy)ethoxy, 1-methoxy-1-methylmethoxy, 1-methoxy-1-methylethoxy, and the like, but is not limited thereto.

In addition, the term "ether" described in the present disclosure is an organic group having at least one ether bond (-O-), and includes 2-methoxyethyl, 2-ethoxyethyl, 2-butoxyethyl, 2-phenoxyethyl, 2-(2-methoxyethoxy)ethyl, 3-methoxypropyl, 3-butoxypropyl, 3-phenoxypropyl, 2-methoxy-1-methylethyl, 2-methoxy-2-methylethyl, 2-methoxyethyl, 2-ethoxyethyl, 2-butoxyethyl, 2-phenoxyethyl, and the like, but is not limited thereto.

In addition, the term "silyl" described in the present disclosure refers to a -SiH₃ radical derived from silane, in which at least one of hydrogen atoms in the silyl group may be substituted by various organic groups such as alkyl and halogen, and specifically, the silyl may include trimethylsilyl, triethylsilyl, t-butyldimethylsilyl, vinyldimethylsilyl, propyldimethylsilyl, triphenylsilyl, diphenylsilyl, phenylsilyl, trimethoxysilyl, methyldimethoxysilyl, ethyldiethoxysilyl, triethoxysilyl, vinyldimethoxysilyl, triphenoxysilyl, and the like, but is not limited thereto.

In addition, the term "alkoxy" described in the present disclosure refers to an -O-alkyl radical, in which "alkyl" is as defined above. An example of the alkoxy radical includes methoxy, ethoxy, propoxy, isopropoxy, butoxy, isobutoxy, t-butoxy, and the like, but is not limited thereto.

In addition, the term "halogen" described in the present disclosure refers to a fluorine, chlorine, bromine, or iodine atom.

In addition, the term "Cₙ" described in the present disclosure means that the number of carbon atoms is n.

The ethylene α-olefin copolymer according to the present disclosure has a specific range of density and melt index and also has a multimodal thermal gradient interaction chromatography (TGIC) distribution. When analyzed by TGIC, a low-crystalline area of the copolymer has a high polymer mobility and has a low elution temperature, and a low-crystalline area has low polymer mobility and a high elution temperature. Thus, when there are both the low-crystalline area and the high-crystalline area, the copolymer has two or more elution sections. Therefore, a resin composition formed by mixing the ethylene α-olefin copolymer according to the present disclosure with polyolefin may have improved impact strength due to the low-crystalline area of the ethylene α-olefin copolymer. In addition, the high-crystalline area of the ethylene α-olefin copolymer prevents a decrease in tensile strength due to an increase in the low-crystalline area in the resin composition, thereby providing a resin composition having sufficient tensile strength and impact strength.

An aspect of the present disclosure provides an ethylene α-olefin copolymer including an ethylene structural unit and an α-olefin structural unit, wherein the ethylene α-olefin copolymer has an elution amount of 10% by weight or more at 35°C when analyzed by thermal gradient interaction chromatography (TGIC).

The α-olefin may be C₂-C₁₂ or C₂-C₈ aliphatic α-olefin. More specifically, it may be propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene, 3,4-dimethyl-1-hexene, or the like, and any one or a mixture of two or more thereof may be used.

Depending on a ratio between the ethylene structural unit and the α-olefin comonomer structural unit present in the ethylene α-olefin copolymer, an elution amount by the temperature of the ethylene α-olefin copolymer may vary. The ratio between the ethylene structural unit and the α-olefin structural unit of the ethylene α-olefin copolymer is not particularly limited, but it is preferred that ethylene and α-olefin are present at a weight ratio of 1:0.4 to 1:1.3, and when the weight ratio is within the range, an ethylene α-olefin copolymer having an elution amount of 10 wt% or more at 35°C when analyzed by TGIC may be obtained. When the weight ratio of ethylene to α-olefin is less than 1:0.4, a comonomer content is low, so that an effect of improving tensile elongation, impact strength at a low temperature, and shrinkage is insignificant, and when the weight ratio is more than 1:1.3, the comonomer content is too high, so that workability may be deteriorated due to occurrence of stickiness between products.

Polymerization of ethylene and α-olefin in the present disclosure may be performed under a catalyst composition including R and S forms of a transition metal compound represented by the following Chemical Formula 1: 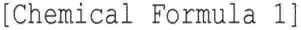 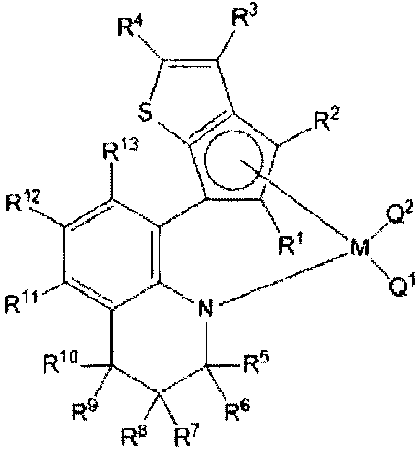 wherein
M is a Group 4 transition metal;
Q¹ and Q² are independently of each other halogen, (C₁-C₂₀) alkyl, (C₂-C₂₀) alkenyl, (C₂-C₂₀) alkynyl, (C₆-C₂₀) aryl, (C₁-C₂₀) alkyl (C₆-C₂₀) aryl, (C₆-C₂₀) aryl (C₁-C₂₀) alkyl, (C₁-C₂₀) alkylamido, (C₆-C₂₀) arylamido, or (C₁-C₂₀) alkylidene;
R¹, R², R³, R⁴, R⁵, R⁶, R⁷, R⁸, R⁹, and R¹⁰ are independently of one of hydrogen; (C₁-C₂₀) alkyl containing or not containing an acetal, ketal, or ether group; (C₂-C₂₀) alkenyl containing or not containing an acetal, ketal, or ether group; (C₁-C₂₀) alkyl (C₆-C₂₀) aryl containing or not containing an acetal, ketal, or ether group; (C₆-C₂₀) aryl (C₁-C₂₀)alkyl containing or not containing an acetal, ketal, or ether group; or (C₁-C₂₀) silyl containing or not containing an acetal, ketal, or ether group; or R¹ and R² may be connected to each other to form a ring, R³ and R⁴ may be connected to each other to form a ring, and two or more of R⁵ to R¹⁰ may be connected to each other to form a ring; and
R¹¹, R¹², and R¹³ are independently of one of hydrogen; (C₁-C₂₀)alkyl containing or not containing an acetal, ketal, or ether group; (C₂-C₂₀) alkenyl containing or not containing an acetal, ketal, or ether group; (C₁-C₂₀) alkyl (C₆-C₂₀) aryl containing or not containing an acetal, ketal, or ether group; (C₆-C₂₀) aryl (C₁-C₂₀) alkyl containing or not containing an acetal, ketal, or ether group; (C₁-C₂₀) silyl containing or not containing an acetal, ketal, or ether group; (C₁-C₂₀) alkoxy; or (C₆-C₂₀) aryloxy; or R¹¹ and R¹² are may be connected to each other to form a ring, and R¹² and R¹³ connected to each other to form a ring.

The transition metal compound represented by Chemical Formula 1 includes a ligand having a new structure in which an amido ligand and an ortho-phenylene form a condensed ring and a pentacyclic n-ligand bonded to the ortho-phenylene is fused by a thiophene heterocycle. Accordingly, the transition metal compound has higher copolymerization activity of ethylene and α-olefin than a transition metal compound in which a thiophene heterocycle is not fused.

According to the present disclosure, in the transition metal compound represented by Chemical Formula 1, R¹, R², R³, R⁴, R⁵, R⁶, R⁷, R⁸, R⁹, R¹⁰, R¹¹, R¹², and R¹³ may independently be one of substituted by a substituent containing an acetal, ketal, or ether group, and when the compound is substituted by the substituent described above, it may be more favorable for supporting the transition metal compound on a surface of a carrier.

In addition, in the transition metal compound represented by Chemical Formula 1, M may be titanium (Ti), zirconium (Zr), or hafnium (Hf).

In addition, in the transition metal compound represented by Chemical Formula 1, Q¹ and Q² may be independently of each other, preferably, halogen or (C₁-C₂₀)alkyl, and more preferably, chlorine or methyl.

In addition, in the transition metal compound represented by Chemical Formula 1, R¹, R², R³, R⁴, and R⁵ may independently be one of hydrogen or (C₁-C₂₀) alkyl, and preferably, may independently be one of hydrogen or methyl. More preferably, R¹, R², R³, R⁴, and R⁵ may independently be one of hydrogen or methyl, but at least one of R³ and R⁴ may be methyl and R⁵ may be methyl.

In addition, in the transition metal compound represented by Chemical Formula 1, R⁶, R⁷, R⁸, R⁹, R¹⁰, R¹¹, R¹², and R¹³ may be preferably hydrogen, respectively.

It is preferred that the transition metal compound represented by Chemical Formula 1 includes the substituents described above for controlling an electronic and three-dimensional environment around metal.

Meanwhile, the transition metal compound represented by Chemical Formula 1 may be obtained by a precursor compound represented by the following Chemical Formula 5:

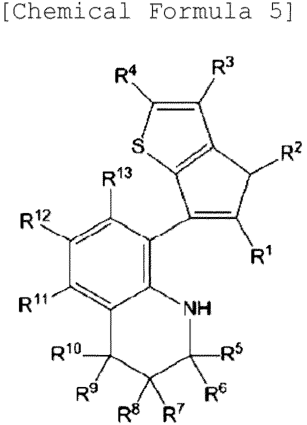

wherein R¹, R², R³, R⁴, R⁵, R⁶, R⁷, R⁸, R⁹, R¹⁰, R¹¹, R¹², and R¹³ are as defined above in Chemical Formula 1.

Herein, the precursor compound represented by Chemical Formula 5 may be prepared by a method including: (i) reacting a tetrahydroquinoline derivative represented by the following Chemical Formula 6 with alkyllithium and then adding carbon dioxide to prepare a compound represented by Chemical Formula 7; and (ii) reacting the compound represented by Chemical Formula 7 and alkyllithium, adding a compound represented by the following Chemical Formula 8, and performing an acid treatment: 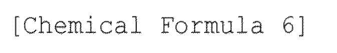 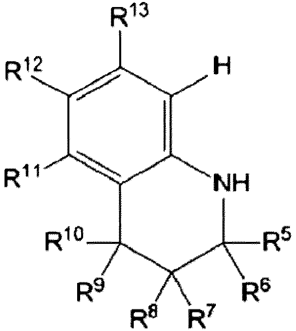 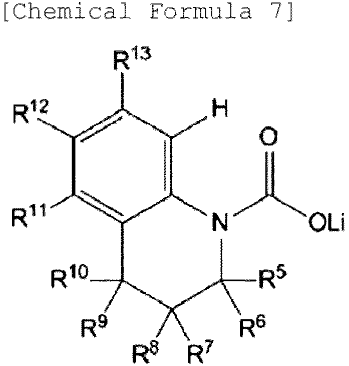 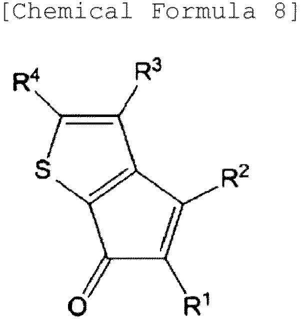 wherein R¹, R², R³, R⁴, R⁶, R⁶, R⁷, R⁸, R⁹, R¹⁰, R¹¹, R¹², and R¹³ are as defined above in Chemical Formula 1.

However, in Chemical Formulae 6, 7, and 8, R¹, R², R³, R⁴, and R⁵ may independently be one of hydrogen or (C₁-C₂₀)alkyl, and preferably, may independently be one of hydrogen or methyl. More preferably, R¹, R², R³, R⁴, and R⁵ may independently be one of hydrogen or methyl, but at least one of R³ and R⁴ may be methyl and R⁵ may be methyl. In addition, it is preferred that R⁶, R⁷, R⁸, R⁹, R¹⁰, R¹¹, R¹², and R¹³ are hydrogen, respectively. Thus, accessibility and reactivity of a starting material may be secured, and it is favorable to control the electronic and three-dimensional environment of the transition metal compound of Chemical Formula 1 to be prepared.

In the preparation of the precursor compound represented by Chemical Formula 5, (i) is a reaction in which the tetrahydroquinoline derivative represented by Chemical Formula 6 reacts with alkyllithium and then carbon dioxide is added to perform conversion into the compound represented by Chemical Formula 7, and may be performed according to a method described in a known literature (Tetrahedron Lett. 1985, 26, 5935; Tetrahedron 1986, 42, 2571; J. Chem. SC. Perkin Trans. 1989, 16.).

In addition, in step (ii), the compound represented by Chemical Formula 7 is reacted with alkyllithium to cause a deprotonation reaction to produce an ortho-lithium compound, with which the compound represented by Chemical Formula 8 is reacted, and then an acid treatment is performed, thereby obtaining the transition metal compound precursor represented by Chemical Formula 5.

The reaction of reacting the compound represented by Chemical Formula 7 with alkyllithium to produce an ortho-lithium compound may be understood through a known literature (Organometallics 2007, 27, 6685; Korean Patent Laid-Open Publication No. 2008-0065868), and in the present disclosure, the compound represented by Chemical Formula 8 is reacted therewith and an acid treatment is performed, thereby obtaining the transition metal compound precursor represented by Chemical Formula 5.

Herein, the compound represented by Chemical Formula 8 may be prepared by various known methods. The following Reaction Formula 1 shows one of the examples, and since the preparation may be performed by only one step and an inexpensive material is used, the transition metal compound precursor of the present disclosure may be easily and economically prepared (J. Organomet. Chem., 2005, 690, 4213):

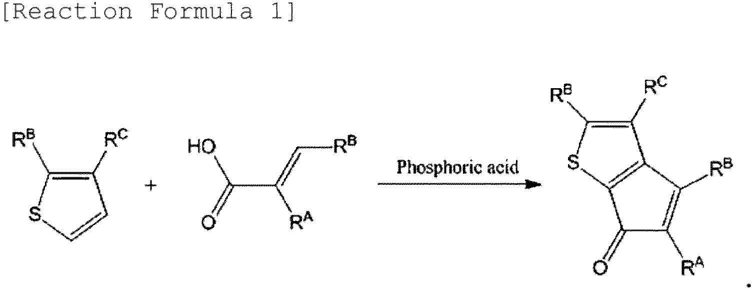

Meanwhile, in order to synthesize the transition metal compound represented by Chemical Formula 1 from the precursor compound represented by Chemical Formula 5 obtained by the above method, various known methods may be used. Preparation may be performed by adding about 2 equivalents of alkyllithium to the precursor compound represented by Chemical Formula 5 to induce a deprotonation reaction, thereby preparing a dilithium compound of a cyclopentadienyl anion and an amide anion, and then adding (Q¹) (Q²)MCl₂ thereto to remove about 2 equivalents of LiCl.

In addition, the compound represented by Chemical Formula 5 and a M(NMe₂)₄ compound are reacted and about 2 equivalents of HNMe₂ is removed to obtain the transition metal compound represented by Chemical Formula 1 in which both Q¹ and Q² are NM₂, and Me₃SiCl or Me₂SiCl₂ is reacted therewith to change a NM₂ ligand to a chlorine ligand.

Since the transition metal compound represented by Chemical Formula 1 prepared by the above process includes both R and S forms, when a polymerization reaction is performed under a catalyst composition including all of the structures, two types of polymers having different structures and physical properties may be formed.

This is considered to be due to a difference in an ethylene conversion rate between R and S forms. Though the comonomer conversion rates of R and S forms are similar, they may have different ethylene conversion rates due to a three-dimensional structural difference. Specifically, since the R form has a larger space to which ethylene may be inserted than the S form, additional energy is needed for forming a specific arrangement for a polymerization reaction. Therefore, the R form shows a low ethylene conversion rate, and thus, may form a polymer chain having a higher comonomer content and a thin lamella thickness. However, the S form shows a high ethylene conversion rate, has a lower comonomer content, and may form a polymer chain having a larger lamella thickness.

In order to prepare the ethylene α-olefin copolymer having two types of polymer chains having different comonomer contents under the catalyst composition, it is preferred that the R form and the S form are present at a mole ratio of 1:0.1 to 1:1. When the mole ratio is less than 1:0.1, a large number of low-density polymer chains are formed due to the dominance of the R form to cause stickiness of a product, and when the mole ratio is more than 1:1, a large number of high-density polymer chains are formed, so that sufficient impact strength may not be secured.

In the present disclosure, the catalyst composition may further include a cocatalyst compound. The cocatalyst compound activates the transition metal compound, and may be an aluminoxane compound, an organo-aluminum compound, a bulky compound which activates a catalyst compound, and the like. Specifically, the cocatalyst compound may be selected from the group consisting of compounds represented by the following Chemical Formulae 2 to 4:

[Chemical Formula 2] - [Al(Ra)-O]ₙ-

wherein
Ra is independently of each other halogen; or a (C₁-C₂₀)hydrocarbyl group unsubstituted or substituted by halogen, and
n is an integer of 2 or more,

[Chemical Formula 3] Q(Rb)₃

wherein
Q is aluminum or boron, and
Rb is independently of each other halogen; or a (C₁-C₂₀)hydrocarbyl group unsubstituted or substituted by halogen,

[Chemical Formula 4] [W]⁺[Z(Rc)₄]⁻

wherein
[W]⁺ is a cationic Lewis acid; or a cationic Lewis acid to which a hydrogen atom is bonded,
Z is a group 13 element, and
Rc is independently of each other a (C₆-C₂₀) aryl group substituted by one or two or more substituents selected from the group consisting of halogen, a (C₁-C₂₀)hydrocarbyl group, an alkoxy group, and a phenoxy group; or a (C₁-C₂₀) alkyl group substituted by one or two or more substituents selected from the group consisting of halogen, (C₁-C₂₀)hydrocarbyl group, an alkoxy group, and a phenoxy group.

The cocatalyst compound is included in the catalyst with the transition metal compound represented by Chemical Formula 1 to serve to activate the transition metal compound. Specifically, in order for the transition metal compound to be an active catalyst component used in olefin polymerization, a ligand in the transition metal compound is extracted to cationize a center metal (M¹ or M²), so that the compound including the unit represented by Chemical Formula 2, the compound represented by Chemical Formula 3, and the compound represented by Chemical Formula 4 capable of acting as a counter ion having a weak binding force, that is, an anion acts as a catalyst together.

The "unit" represented by Chemical Formula 2 has a structure in which n structures in parentheses ([]) are connected in the compound, and when including the unit represented by Chemical Formula 2, other structures in the compound is not particularly limited, and may be a cluster type in which the repeating units represented by Chemical Formula 2 are connected to each other, for example, a spherical compound.

In order for the cocatalyst compound to show a better activation effect, the compound represented by Chemical Formula 2 is not particularly limited as long as it is alkylaluminoxane, but a preferred example thereof may be methylaluminoxane, ethylaluminoxane, isobutylaluminoxane, butylaluminoxane, and the like, and a particularly preferred compound is methylaluminoxane.

In addition, the compound represented by Chemical Formula 3 is an alkyl metal compound and is not particularly limited, and a non-limiting example thereof may be trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like. Considering the activity of the transition metal compound, one or two or more selected from the group consisting of trimethylaluminum, triethylaluminum, and triisobutylaluminum may be preferably used.

Considering the activity of the transition metal compound, the compound represented by Chemical Formula 4 wherein [W]⁺ is a dimethylanilinium cation as the cationic Lewis acid to which a hydrogen atom is bonded, or [(C₆H₅)₃C]⁺ as the cationic Lewis acid, and [Z(Rc)₄]⁻ is [B(C₆F₅)₄]⁻ may be preferably used.

The compound represented by Chemical Formula 4 is not particularly limited, but a non-limiting example in which [W]⁺ is a cationic Lewis acid to which a hydrogen atom is bonded may include triphenylcarbenium borate, trimethylammonium tetraphenylborate, methyldioctadecylammonium tetraphenylborate, triethylammonium tetraphenylborate, tripropylammonium tetraphenylborate, tri(n-butyl)ammonium tetraphenylborate, methyltetradicyclooctadecylammonium tetraphenylborate, N,N-dimethylanilinium tetraphenylborate, N,N-diethylanilinium tetraphenylborate, N,N-dimethyl(2,4,6-trimethylanilinium)tetraphenylborate, trimethylammonium tetrakis(pentafluorophenyl)borate, methylditetradecylammonium tetrakis(pentaphenyl)borate, methyldioctadecylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(secbutyl)ammonium tetrakis(pentafluorophenyl)borate, N,N-dimethylanilinium tetrakis(pentafluorophenyl)borate, N,N-diethylanilinium tetrakis(pentafluorophenyl)borate, N,N-dimethyl(2,4,6-trimethylanilinium)tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate, N,N-dimethyl-(2,4,6-trimethylanilinium)tetrakis-(2,3,4,6-tetrafluorophenyl)borate, dioctadecylammonium tetrakis(pentafluorophenyl)borate, ditetradecylammonium tetrakis(pentafluorophenyl)borate, dicyclohexylammonium tetrakis(pentafluorophenyl)borate, triphenylphosphonium tetrakis(pentafluorophenyl)borate, methyldioctadecylphosphonium tetrakis(pentafluorophenyl)borate, tri(2,6-dimethylphenyl)phosphonium tetrakis(pentafluorophenyl)borate, methyldi (octadecyl) ammonium tetrakis(pentafluorophenyl)borate, methyldi(tetradecyl)-ammonium tetrakis(pentafluorophenyl)borate, trityl tetrakis(pentafluorophenyl)borate, and the like.

The catalyst may be prepared using the compound of Chemical Formulae 1 to 4, and a method of preparing the catalyst may use the methods exemplified below.

First, when Q¹ and Q² of the transition metal compound represented by Chemical Formula 1 are halogen, the compound represented by Chemical Formula 2 is brought into contact. Second, when Q¹ and Q² in Chemical Formula 1 is an alkyl radical, a mixture of the transition metal compound and the compound represented by Chemical Formulae 3 and 4 are brought into contact to prepare a catalyst, or the compounds represented by Chemical Formulae 3 and 4 are directly added to a polymerizer, respectively to perform preparation.

An amount of the cocatalyst compound added may be determined considering an amount of the transition metal compound represented by Chemical Formula 1 added, an amount required to sufficiently activate the transition metal compound, and the like. A content of the cocatalyst compound may be 1:1 to 100,000, preferably 1:1 to 10,000, and more preferably 1:1 to 5,000, based on the mole ratio of the metal contained in the cocatalyst compound, with respect to 1 mol of the transition metal contained in the transition metal compound represented by Chemical Formula 1.

More specifically, in the case of the first method, the compound represented by Chemical Formula 2 may be included in a mole ratio of preferably 1:10 to 5,000, more preferably 1:50 to 1,000, and most preferably 1:100 to 1,000, with respect to the transition metal compound represented by Chemical Formula 1. When the mole ratio of the compound represented by Chemical Formula 2 to the transition metal compound of Chemical Formula 1 is less than 1:10, an amount of aluminoxane is too small, so that activation of the transition metal compound does not completely proceed, and when the ratio is more than 1:5,000, an excessive amount of aluminoxane acts as a catalyst poison, so that polymer chains may not grow well.

In the case of the second method, when A of the cocatalyst compound represented by Chemical Formula 3 is boron, it may be included at a mole ratio of 1:1 to 100, preferably 1:1 to 10, and more preferably 1:1 to 3 with respect to the transition metal compound represented by Chemical Formula 1. In addition, when A of the cocatalyst compound represented by Chemical Formula 3 is aluminum, though it varies depending on the amount of water in a polymerization system, it may be included at a mole ratio of 1:1 to 1000, preferably 1:1 to 500, and more preferably 1:1 to 100, with respect to the transition metal compound represented by Chemical Formula 1.

In addition, the cocatalyst compound represented by Chemical Formula 4 may be included at a mole ratio of 1:0.5 to 30, preferably 1:0.7 to 20, and more preferably 1:1 to 10, with respect to the transition metal compound represented by Chemical Formula 1. When the ratio of the cocatalyst compound represented by Chemical Formula 4 is less than 1:0.5, an amount of the activator is relatively small, so that activation of the metal compound may not completely occur to deteriorate activity of the produced catalyst composition, and when it is more than 1:30, activation of the metal compound completely occurs, but the unit prices of the catalyst composition is not economical due to the remaining excessive activator, or the purity of the produced polymer may be lowered.

Meanwhile, the catalyst composition of the present disclosure including the transition metal compound and the cocatalyst compound may further include a carrier. Herein, the carrier may be an inorganic or organic carrier which is used for preparing a catalyst in the art to which the present disclosure pertains without limitation.

According to the present disclosure, the carrier may be SiO₂, Al₂O₃, MgO, MgCl₂, CaCl₂, ZrO₂, TiO₂, B₂O₃, CaO, ZnO, BaO, ThO₂, SiO₂-Al₂O₃, SiO₂-MgO, SiO₂-TiO₂, SiO₂-V₂O₅, SiO₂-Cr₂O₃, SiO₂-TiO₂-MgO, bauxite, zeolite, starch, cyclodextrine, or a synthetic polymer.

Preferably, the carrier contains a hydroxyl group on the surface and may be one or more selected from the group consisting of silica (SiO₂), silica-alumina (SiO₂-Al₂O₃), and silica-magnesia (SiO₂-MgO).

A method of supporting the catalyst including the transition metal compound and the cocatalyst compound on the carrier may include a method of directly supporting the transition metal compound on a dehydrated carrier; a method of pretreating the carrier with the cocatalyst compound and then supporting the transition metal compound on the carrier; a method of supporting the transition metal compound on the carrier and then performing a posttreatment with the cocatalyst compound; a method of reacting the transition metal compound and the cocatalyst compound and then adding the carrier to perform a reaction, and the like.

A solvent which may be used in the supporting method may be aromatic hydrocarbon-based solvents, aromatic hydrocarbon-based solvents, halogenated aliphatic hydrocarbon-based solvents, or mixtures thereof.

A non-limiting example of the aliphatic hydrocarbon-based solvent may include pentane, hexane, heptane, octane, nonane, decane, undecane, dodecane, or the like.

A non-limiting example of the aromatic hydrocarbon-based solvent may include benzene, monochlorobenzene, dichlorobenzene, trichlorobenzene, toluene, or the like.

A non-limiting example of the halogenated aliphatic hydrocarbon-based solvent may include dichloromethane, trichloromethane, dichloroethane, trichloroethane, or the like.

In addition, it is favorable in terms of efficiency of the supporting process to perform the supporting method at a temperature of -70 to 200°C, preferably -50 to 150°C, and more preferably 0 to 100°C.

Meanwhile, since the ethylene α-olefin polymer produced by a polymerization process which is performed by directly bringing ethylene and an α-olefin comonomer compound into contact has a relatively insoluble and/or immobilizable catalyst site, it may be prepared by polymerization of monomers under the conditions in which polymer chains are rapidly immobilized according to their information. The immobilization may be, for example, performed by using a solid insoluble catalyst, performing polymerization in a medium in which the produced polymer is generally insoluble, and maintaining a polymerization reactant and a product at or below a crystallization temperature (T_{c}) of the polymer.

The catalyst described above may be preferably applied to copolymerization of ethylene and α-olefin. Hereinafter, a method of preparing an ethylene α-olefin copolymer including copolymerizing ethylene and α-olefin under the catalyst will be described.

A polymerization process of ethylene and α-olefin is well known in the art, and includes bulk polymerization, solution polymerization, slurry polymerization, and lowpressure gas phase polymerization. A metallocene catalyst is particularly useful for a known manipulation form using a fixed bed, moving bed, or slurry process which performs in a single, series, or parallel reactor.

When the polymerization reaction is performed in a liquid or slurry phase, a solvent or propylene or an ethylene monomer itself may be used as a medium.

Since the catalyst presented in the present disclosure is present in a homogeneous form in a polymerization reactor, it is preferred to apply the catalyst to a solution polymerization process which is performed at or above a melting point of the polymer. However, as disclosed in U.S. Patent No. 4,752,597, the catalyst may be used in a slurry polymerization or gas phase polymerization process in the form of a heterogeneous catalyst composition which is obtained by supporting the transition metal compound and the cocatalyst on a porous metal oxide support. Therefore, the catalyst of the present disclosure may be applied to a slurry or gas phase process, when it is used with an inorganic carrier or an organic polymer carrier. That is, the transition metal compound and the cocatalyst compound may be also used as a form being supported on an inorganic carrier or an organic polymer carrier.

A solvent which may be used in the polymerization reaction may be aliphatic hydrocarbon-based solvents, aromatic hydrocarbon-based solvents, halogenated aliphatic hydrocarbon-based solvents, or mixtures thereof. Herein, a non-limiting example of the aliphatic hydrocarbon-based solvent may include butane, isobutane, pentane, hexane, heptane, octane, nonane, decane, undecane, dodecane, cyclopentane, methylcyclopentane, cyclohexane, and the like. In addition, a non-limiting example of the aromatic hydrocarbon-based solvent may include benzene, monochlorobenzene, dichlorobenzene, trichlorobenzene, toluene, xylene, chlorobenzene, and the like. In addition, a non-limiting example of the halogenated aliphatic hydrocarbon solvent may include dichloromethane, trichloromethane, chloroethane, dichloroethane, trichloroethane, 1,2-Dichloroethane, and the like.

As described above, the ethylene α-olefin copolymer according to the present disclosure may be prepared by polymerizing ethylene and an α-olefin comonomer in the presence of the catalyst composition. Herein, the transition metal compound and cocatalyst components may be separately added to a reactor, or added to the reactor after previously mixing each component, and mixing conditions such as addition order, temperature, or concentration are not separately limited.

Meanwhile, in the polymerization reaction according to the present disclosure, since an amount of the catalyst added may be determined within a range in which the polymerization reaction of a monomer may sufficiently occur depending on a slurry phase, liquid phase, gas phase, or solution process, it is not particularly limited. However, the amount of the catalyst added is preferably 10⁻⁸ to 1 mol/L, more preferably 10⁻⁷ to 10⁻¹ mol/L, and still more preferably 10⁻⁷ to 10⁻² mol/L, based on the concentration of a center metal (M) in the transition metal compound per unit volume (L) of the monomer.

In addition, the polymerization reaction of the present disclosure is performed by a batch type, semicontinuous type, or continuous type reaction, and preferably, may be performed by a continuous type reaction.

The temperature conditions of the polymerization reaction of the present disclosure may be determined considering the efficiency of the polymerization reaction depending on the type of reaction and the type of reactor to apply. However, since the temperature of the polymerization reaction affects the elution amount of the ethylene α-olefin copolymer when analyzed by TGIC, it is preferred to perform the polymerization reaction at 130 to 160°C. When the temperature is lower than 130°C or higher than 160°C, polymerization activity is lowered, which is thus not preferred.

Meanwhile, the pressure conditions of the polymerization reaction may be determined considering the efficiency of the polymerization reaction depending on the type of reaction and the type of reactor to apply, and the pressure may be 1 to 100 atm, preferably 5 to 50 atm.

The ethylene α-olefin copolymer according to the present disclosure may show an elution amount pattern in a bimodal form when analyzed by TGIC, and this means that there are two types of chains having different configurations.

Specifically, the ethylene α-olefin copolymer according to the present disclosure include both chains having a high comonomer content and chains having a low comonomer content, and it shows a peak at 35°C when analyzed by TGIC due to the chains having a high comonomer content, and has higher tensile strength and tensile elongation than a conventional copolymer having density and melt index in a similar range.

Preferably, the ethylene α-olefin copolymer has an elution amount of 10 wt% or more at 35°C when analyzed by TGIC, and a short chain branch (SCB) content per 1,000 carbon atoms of the ethylene α-olefin copolymer eluted at 35°C may be 70 to 110. As such, the ethylene α-olefin copolymer eluted at 35°C may show a relatively high weight average molecular weight due to the high comonomer content.

When the ethylene α-olefin copolymer does not satisfy the elution amount at 35°C, the SCB content, and the weight average molecular weight range, sufficient tensile strength and tensile elongation may not be secured.

As described above, the ethylene α-olefin copolymer according to the present disclosure shows an elution amount pattern in a bimodal form when analyzed by TGIC, and thus, may show a peak at 75 to 95°C in addition to the peak at 35°C. The copolymer eluted at 75 to 95°C is due to the chains having a low comonomer content, and the elution amount at this time may be preferably 6 to 20 wt%.

In addition, the ethylene α-olefin copolymer has the physical properties in a similar range to the conventional ethylene α-olefin copolymer, and specifically, may have a density of 0.850 to 0.920 g/mL and a melt index (MI) of 0.1 to 50 g/10 min.

In addition, the ethylene α-olefin copolymer may have a weight average molecular weight (Mw) of 10,000 to 1,000,000 g/mol, preferably 50,000 to 800,000 g/mol, more preferably 230,000 to 500,000 g/mol, and a molecular weight distribution (Mw/Mn) of 1 to 10, preferably 1.5 to 8, and more preferably 1.5 to 6.

In addition, the ethylene α-olefin copolymer may have a tensile elongation of 100 to 1000% and a tensile strength of 0.1 to 100 MPa.

Since the ethylene α-olefin copolymer according to the present disclosure contains a larger number of chains having a high comonomer content than an ethylene α-olefin copolymer having density and melt index in a similar range, the resin composition including the ethylene α-olefin copolymer and a polyolefin may have high impact strength, in particular, high impact strength at a low temperature and low shrinkage without a decrease in tensile strength and tensile elongation.

### [Mode for Invention]

Hereinafter, the examples of the present disclosure will be described in detail. The following examples are only illustrative of the present disclosure, and do not limit the scope of the present disclosure.

### Synthesis Example - Synthesis of transition metal compound

According to the following Reaction Formula 2, a transition metal compound used as a main catalyst was synthesized. A specific synthesis process was as follows:

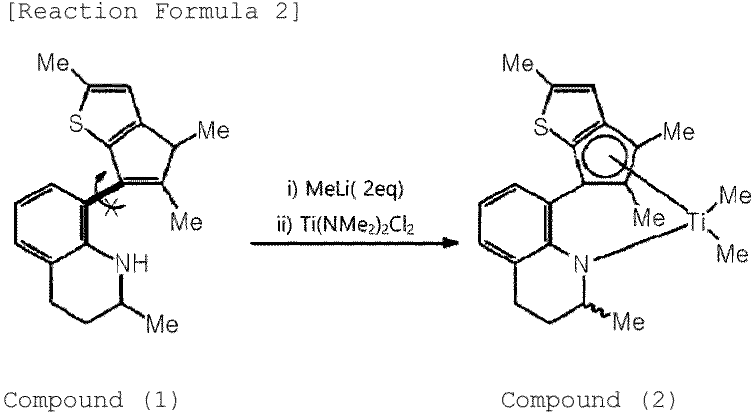

First, to a diethyl ether solution (10 mL) in which compound (1) (0.58 g, 1.79 mmol) was dissolved, methyllithium (1.63 g, 3.55 mmol, 1.6 M diethylether solution) was added dropwise at -30°C (i). After the solution was stirred at room temperature overnight, the temperature was lowered to -30°C, and Ti(NMe₂)₂Cl₂ (0.37g, 1.79 mmol) were added simultaneously (ii). After stirring the solution 3 hours, the solvent was all removed using a vacuum pump. As a result, a red solid compound (2) was obtained (0.59 g, yield: 75%).

It was confirmed from the ¹H NMR spectrum that there were two stereocompounds at 1:0.8.

¹H NMR (C₆D₆): d 7.12 and 7.09 (d, J = 7.2 Hz, 1H), 6.96 and 6.94 (d, J = 7.2 Hz, 1H), 6.82 and 6.80 (t, J = 7.2Hz, 1H),6.47 and 6.46 (d,J = 7.2Hz, 1H), 6.45 and 6.44 (d, J = 7.2Hz, 1H), 5.44 (m, 1H, NCH), 2.76-2.60 (m, 1H, CH₂), 2.44-2.18 (m, 1H, CH₂), 2.28 and 2.22 (s, 3H), 2.09 (s, 3H), 1.74 and 1.65 (s, 3H), 1.88-1.48 (m, 2H, CH₂), 1.20 and 1.18 (d, J = 7.2 Hz, 3H), 0.77 and 0.71 (s, 3H, TiMe), 0.49 and 0.40 (s, 3H, TiMe) ppm.

¹³C{1H} NMR (C₆D₆): d 159.83, 159.52, 145.93, 144.90, 140.78, 139.93, 139.21, 138.86, 135.26, 131.56, 129.69, 129.57, 127.50, 127.46, 127.38, 127.24, 121.29, 121.16, 120.05, 119.96, 118.90, 118.74, 117.99, 117.74, 113.87, 110.38, 57.91, 55.31, 54.87, 51.68, 50.27, 50.12, 34.77, 27.58, 27.27, 23.10, 22.05, 20.31, 19.90, 16.66, 14.70, 13.11, 12.98, 12.68 ppm. Anal. Calc. (C₂₂H₂₇NSTi): C, 68.56; H, 7.06; N, 3.63. Found: C, 68.43; H, 7.24; N, 3.52%.

### Preparation of copolymer

### (1) Example 1

The inside of a high-pressure reactor (internal volume: (2,8 L, stainless steel) was replaced with nitrogen at room temperature, 1 L of normal hexane and 2.0 mmol of triisobutylaluminum were added thereto, and 121.5 g of purified 1-butene was added to alumina. Subsequently, 135.0 g of ethylene gas (1-butene/ethylene addition ratio: 0.9 weight ratio) was injected, and a reactor temperature was preheated to 136°C.

A dimethylanilinium tetrakis(pentafluorophenyl)borate cocatalyst (45.0 µmol) solution was mixed with a mixed solution including the solid transition metal compound (7.5 µmol) synthesized in the synthesis example and triisobutyl aluminum (187.5 µmol), the mixture was injected to the reactor, and a polymerization reaction was performed for 5 minutes.

After completing the polymerization reaction, the temperature was lowered to room temperature, residual ethylene was discharged, and the copolymer dispersed in the solvent was dried at 80°C in a vacuum oven.

### (2) Example 2

A copolymer was prepared by performing the same polymerization reaction as in Example 1, except that 135 g of 1-butene and 135.0 g of ethylene gas (1-butene/ethylene addition ratio: 1.0 weight ratio) were injected, and then the reactor temperature was preheated to 153°C.

### (3) Example 3

A copolymer was prepared by performing the same polymerization reaction as in Example 1, except that 162 g of 1-butene and 135.0 g of ethylene gas (1-butene/ethylene addition ratio: 1.2 weight ratio) were injected, and then the reactor temperature was preheated to 148°C.

### (4) Comparative Example 1

A commercially available ethylene α-olefin copolymer (LG Chem., LC565) was used.

### Preparation of resin composition

70 wt% of polypropylene (LOTTE Chemical, JM-380), 20 wt% of the example, and 10 wt% of Talc were blended using a tumbler mixer, and extruded in a temperature range of 190 to 230°C in a single screw extruder having L/D of 35 and a diameter of 40 mm, thereby preparing a resin composition in a pellet state. The resin composition in a pellet phase was molded in a temperature range of 190 to 240°C using an injection molding machine to prepare a physical property specimen.

### Analysis of physical properties of copolymer and resin composition

### (1) Density

A sheet having a thickness of 3 mm and a radius of 2 cm was manufactured at 180°C with a compression mold using a copolymer treated with an antioxidant, cooled to room temperature, and measured according to ASTM D-792 (manufacturer: Toyoseiki, model name: T-001).

### (2) Melt index (MI)

Measured according to ASTM D-1238 (condition E, 190°C, load: 2.16 kg) (manufacturer: Mirage, model name: SD-120L).

### (3) Thermal gradient interaction chromatography (TGIC) analysis

A copolymer was dissolved in 1,2,4-trichlorobenzene, injected to an instrument (manufacturer: PolymerChar, model name: CFC), and then eluted to a GPC column at a flow velocity of 1 ml/min while heating from 35°C to 130°C in 5°C increments. An amount of the polymer eluted at 35°C, a short chain branch (SCB) degree, and Mw were measured using an infrared detector.

### (4) Tensile elongation

Measured in accordance with the method of ASTM D638.

### (5) Tensile strength

Measured in accordance with the method of ASTM D638.

### (7) Izod impact strength (23°C)

Notch impact strength of a 1/8" specimen was measured at 23°C in accordance with the method of ASTM D256.

### (8) Izod impact strength (-10°C)

Notch impact strength of a 1/8" specimen was measured at -10°C in accordance with the method of ASTM D256.

### (9) Izod impact strength (-30°C)

Notch impact strength of a 1/8" specimen was measured at -30°C in accordance with the method of ASTM D256.

**[Table 1]**

| | | Example 1 | Example 2 | Example 3 | Comparative Example 1 |
|---|---|---|---|---|---|
| Reaction condition | Polymerization reaction temperature (°C) | 158 | 153 | 148 | - |
| | Addition weight ratio of 1-butene/ethylene | 0.9 | 1.0 | 1.2 | - |
| TGIC analysis results | Elution amount at 35°C (wt%) | 10 | 25 | 40 | 5 |
| | SCB at 35°C (CH3/1000C) | 88 | 96 | 100 | 90 |
| | Mw at 35°C | 20 | 53 | 55 | 15 |
| Physical properties of copolymer | Density (g/mL) | 0.865 | 0.865 | 0.865 | 0.865 |
| | MI (g/10 min) | 5.0 | 5.0 | 5.0 | 5.0 |
| | Tensile elongation (%) | 1000 | 1000 | 1000 | 550 |
| | Tensile strength (MPa) | 2.0 | 2.1 | 2.2 | 1.9 |
| Processing properties of resin composition | Impact strength (23°C, J/m) | 353.2 | 372.4 | 372.4 | 342.0 |
| | Impact strength (-10°C, J/m) | 95.1 | 98.0 | 107.8 | 72.5 |
| | Impact strength (-30°C, J/m) | 28.4 | 29.4 | 32.3 | 28.4 |
| | Shrinkage (mm/1000 nm) | 8.6 | 8.6 | 8.2 | 11.3 |

Referring to Table 1 and FIG. 1, the copolymers of Examples 1 to 3 had an elution amounts at 35°C of 10 wt% or more, which satisfies the range of the present disclosure, and it was confirmed that the polymer chains eluted at 35°C had a high SCB content and a high molecular weight. In addition, it was confirmed that Examples 1 to 3 had high tensile elongation while maintaining density, MI, and tensile strength similar to those of Comparative Example 1.

The results were according to the preparation of the copolymers of Examples 1 to 3 under the catalyst containing the compound (2), and the compound (2) has isomers of S form and R form as follows. Since the ethylene conversion rate varies depending on the structure of the compound (2), two types of polymer chains having different comonomer contents may be formed.

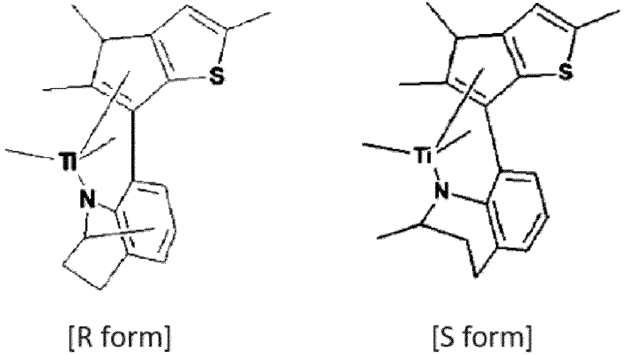

Furthermore, the resin compositions in which the copolymers of Examples 1 to 3 were mixed with polypropylene showed the results of significantly improved impact strength at room temperature and a low temperature and a decreased shrinkage, as compared with Comparative Example 1.

## Claims

1. An ethylene α-olefin copolymer comprising an ethylene structural unit and an α-olefin structural unit, wherein the ethylene α-olefin copolymer has an elution amount of 10 wt% or more at 35°C when analyzed by thermal gradient interaction chromatography (TGIC).

2. The ethylene α-olefin copolymer of claim 1, wherein a short chain branch (SCB) content per 1,000 carbon atoms of the ethylene α-olefin copolymer eluted at 35°C is 70 to 110.

3. The ethylene α-olefin copolymer of claim 1, wherein the ethylene α-olefin copolymer further has an elution amount of 6 to 20 wt% at 75 to 95°C.

4. The ethylene α-olefin copolymer of claim 1, wherein the ethylene α-olefin copolymer has a tensile elongation of 600 to 1200%.

5. The ethylene α-olefin copolymer of claim 1, wherein the ethylene α-olefin copolymer has a tensile strength of 2.0 to 3.0 MPa.

6. The ethylene α-olefin copolymer of claim 1, wherein a weight ratio between the ethylene structural unit and the α-olefin structural unit in the ethylene α-olefin copolymer is 1:0.4 to 1:1.3.

7. The ethylene α-olefin copolymer of claim 1, wherein the ethylene α-olefin copolymer is copolymerized under a catalyst composition including R and S forms of a transition metal compound represented by the following Chemical Formula 1: 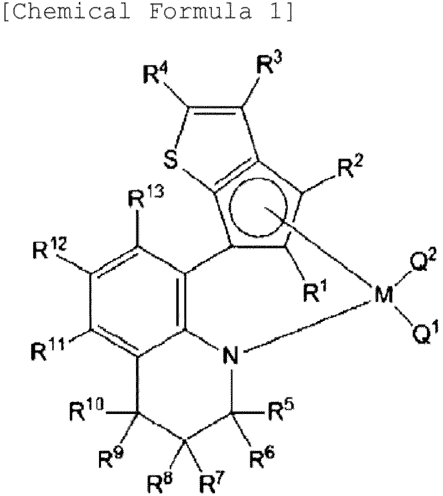 wherein
M is a Group 4 transition metal;
Q¹ and Q² are independently of each other halogen, (C₁-C₂₀) alkyl, (C₂-C₂₀) alkenyl, (C₂-C₂₀) alkynyl, (C₆-C₂₀) aryl, (C₁-C₂₀) alkyl (C₆-C₂₀) aryl, (C₆-C₂₀) aryl (C₁-C₂₀) alkyl, (C₁-C₂₀) alkylamido, (C₆-C₂₀) arylamido, or (C₁-C₂₀) alkylidene;
R¹, R², R³, R⁴, R⁵, R⁶, R⁷, R⁸, R⁹, and R¹⁰ are independently of one of hydrogen; (C₁-C₂₀)alkyl containing or not containing an acetal, ketal, or ether group; (C₂-C₂₀)alkenyl containing or not containing an acetal, ketal, or ether group; (C₁-C₂₀)alkyl (C₆-C₂₀)aryl containing or not containing an acetal, ketal, or ether group; (C₆-C₂₀)aryl (C₁-C₂₀)alkyl containing or not containing an acetal, ketal, or ether group; or (C₁-C₂₀) silyl containing or not containing an acetal, ketal, or ether group; or R¹ and R² may be connected to each other to form a ring, R³ and R⁴ may be connected to each other to form a ring, and two or more of R⁵ to R¹⁰ may be connected to each other to form a ring; and
R¹¹, R¹², and R¹³ are independently of one of hydrogen; (C₁-C₂₀)alkyl containing or not containing an acetal, ketal, or ether group; (C₂-C₂₀)alkenyl containing or not containing an acetal, ketal, or ether group; (C₁-C₂₀) alkyl (C₆-C₂₀) aryl containing or not containing an acetal, ketal, or ether group; (C₆-C₂₀)aryl (C₁-C₂₀)alkyl containing or not containing an acetal, ketal, or ether group; (C₁-C₂₀) silyl containing or not containing an acetal, ketal, or ether group; (C₁-C₂₀)alkoxy; or (C₆-C₂₀)aryloxy; or R¹¹ and R¹² are may be connected to each other to form a ring, and R¹² and R¹³ connected to each other to form a ring.

8. The ethylene α-olefin copolymer of claim 7, wherein a mole ratio between the R form and the S form of the catalyst composition is 1:0.1 to 1:1.

9. The ethylene α-olefin copolymer of claim 7, wherein the catalyst composition further includes a cocatalyst compound selected from the group consisting of compounds represented by the following Chemical Formulae 2 to 4:
[Chemical Formula 2] - [Al(Ra)-O]ₙ-
wherein
Ra is independently of each other halogen; or a (C₁-C₂₀)hydrocarbyl group unsubstituted or substituted by halogen, and
n is an integer of 2 or more,
[Chemical Formula 3] Q(Rb)₃
wherein
Q is aluminum or boron, and
Rb is independently of each other halogen; or a (C₁-C₂₀)hydrocarbyl group unsubstituted or substituted by halogen,
[Chemical Formula 4] [W]⁺[Z(Rc)₄]⁻
wherein
[W]⁺ is a cationic Lewis acid; or a cationic Lewis acid to which a hydrogen atom is bonded,
Z is a group 13 element, and
Rc is independently of each other a (C₆-C₂₀) aryl group substituted by one or two or more substituents selected from the group consisting of halogen, a (C₁-C₂₀)hydrocarbyl group, an alkoxy group, and a phenoxy group; or a (C₁-C₂₀) alkyl group substituted by one or two or more substituents selected from the group consisting of halogen, (C₁-C₂₀)hydrocarbyl group, an alkoxy group, and a phenoxy group).

10. A resin composition comprising a polyolefin and the ethylene α-olefin copolymer of any one of claims 1 to 9.
